# EUROPÄISCHE PATENTANMELDUNG

(11) **EP 3 569 382 A1**
(43) Veröffentlichungstag der Anmeldung: **20.11.2019**
(21) Anmeldenummer: 18173156.3
(22) Anmeldetag: 18.05.2018
(51) Int. Cl.: B29C 45/54, B29C 45/18, B29C 45/58, B29C 45/60, B29C 45/00, B29C 47/10, B29C 47/60, B29C 45/46

(54) **VORRICHTUNG ZUM SPRITZGIESSEN VON FASERVERBUNDKUNSTSTOFFFORMTEILEN**

(71) Anmelder: Arenz GmbH, 53340 Meckenheim (DE); Universität Paderborn, 33098 Paderborn (DE)
(72) Erfinder: Olbrich, Thomas, 53359 Rheinbach (DE); Altendorf, Frank, 53359 Rheinbach (DE); Moritzer, Elmar, 33175 Bad Lippspringe (DE); Wittke, Marius, 33098 Paderborn (DE)
(74) Vertreter: Patentanwälte Dörner & Kötter PartG mbB

(57) **Zusammenfassung**

Die Erfindung betrifft eine Vorrichtung zum Spritzgießen von Faserverbundkunststoffformteilen mit einer einen Extrusionszylinder (2) und eine in diesem um eine Längsachse drehbar angeordnete Extruderschnecke (3) aufweisenden Plastifizierungseinrichtung, einer in dem Extrusionszylinder (2) mündenden Dosiereinrichtung für Fasermaterial sowie einer eine Einspritzdüse (11) aufweisenden Einspritzeinrichtung, wobei die Einspritzeinrichtung wenigstens zwei Kolbenspritzeinheiten (5) umfasst, deren Kolbenzylinder (51) zur wechselnden Beschickung mit plastifizierter Kunststoffmasse über eine Umstelleinrichtung (4) mit der Plastifizierungseinrichtung verbunden sind.

## Beschreibung

Die Erfindung betrifft eine Vorrichtung zum Spritzgießen von Faserverbundkunststoffformteilen mit einer einen Extrusionszylinder und eine in diesem um eine Längsachse drehbar angeordnete Extruderschnecke aufweisenden Plastifizierungseinrichtung, einer in dem Extrusionszylinder mündenden Dosiereinrichtung für Fasermaterial sowie einer eine Einspritzdüse aufweisenden Einspritzeinrichtung.

Zum Spritzgießen von Kunststoffformteilen kommen regelmäßig Spritzmodule zum Einsatz, die eine Extruderschnecke, auch allgemein Schneckenwelle oder Schnecke genannt, umfassen, die in einem Extruderzylinder verschiebbar gelagert ist. Der Innendurchmesser des Extruderzylinders entspricht dabei im Wesentlichen dem Außendurchmesser der Extruderschnecke. Im hinteren Bereich des Extruderzylinders ist ein Trichter zur Zuführung von Kunststoffgranulat angeordnet, in den das Kunststoffgranulat eingefüllt wird und durch eine Öffnung in den Extruderzylinder gelangt. Die Extruderschnecke wird von einem Antrieb in Rotation versetzt und transportiert so das Kunststoffgranulat vorwärts. Dabei wird der Extruderzylinder mittels elektrischer Heizbänder von außen erwärmt. Durch diese Erwärmung und durch die Schneckengeometrie wird das Granulat geschert und nach vorne befördert, wobei der Kunststoff plastifiziert und homogenisiert wird. Am vorderen Ende des Extruderzylinders ist eine Düse angeordnet, die in ein Formwerkzeug mündet. Im Prozess wird die Formmasse durch eine an der Extruderschnecke angeordnete Rückstromsperre bis zur Düse transportiert und davor gestaut. Die Extruderschnecke wird dabei axial mit einem Staudruck beaufschlagt, wobei Sie sich in Richtung des Einfülltrichters verschieben kann und sich so zwischen Rückstromsperre und Düse ein Vorraum bildet, in dem die Formmasse zum Einspritzen angestaut ist. Der Staudruck wirkt gegen die Schmelze, so dass diese verdichtet wird. Durch den Druck, den die Schmelze ausübt, wird die Extruderschnecke zurückbewegt. Beim Einspritzvorgang wird die Extruderschnecke sodann axial zur Düse hinbewegt, wobei sich die Rückstromsperre schließt und so die Kunststoffmasse durch die Düse in das Werkzeug gespritzt wird. Spritzgießvorrichtungen der vorgenannten Art sind beispielsweise in der DE 202 12 963 U1 beschrieben.

Zur Herstellung von Leichtbauteilen ist es bekannt, dem Kunststoffgranulat Glasfasermaterial beizufügen. Dabei hat sich gezeigt, dass insbesondere durch den Einsatz von Langfasermaterial mit einer Faserlänge von etwa 10-15 mm eine besonders hohe Zugfestigkeit bei gleichzeitig geringem Bauteilgewicht erzielbar ist. Bei der Zugabe des Langfasermaterials hat sich jedoch gezeigt, dass dieses durch die Förderung über die Schneckengeometrie geschert wird, so dass die resultierende Faserverbundkunststoffformmasse vor dem Einspritzen in das Formwerkzeug nunmehr Fasern mit einer reduzierten Faserlänge von teilweise unter 1 mm aufweisen. Derzeit wird versucht, diesem Effekt durch aufwändige Schneckengeometrien sowie dem Einsatz von mehr Schneckenanordnungen entgegenzuwirken. Doch auch hier stellt sich weiterhin die Problematik, dass durch den Förderprozess eine Verkürzung der Langfasern durch Abscherung stattfindet.

Hier will die Erfindung Abhilfe schaffen. Der Erfindung liegt die Aufgabe zu Grunde, eine Vorrichtung zum Spritzgießen von Faserverbundkunststoffformteilen bereitzustellen, welche eine Verarbeitung von Langfasermaterial mit reduzierter Längeneinbuße im Prozess ermöglicht. Gemäß der Erfindung wird diese Aufgabe durch die Merkmale des kennzeichnenden Teils des Patentanspruchs 1 gelöst.

Mit der Erfindung ist eine Vorrichtung zum Spritzgießen von Faserverbundkunststoffformteilen bereitgestellt, die eine Verarbeitung von Langfasermaterial unter reduzierter Längeneinbuße ermöglicht. Dadurch, dass die Einspritzeinrichtung wenigstens zwei Kolbenspritzeinheiten umfasst, deren Kolbenzylinder zur wechselnden Beschickung mit plastifizierter Kunststoffmasse über eine Umstelleinrichtung mit der Plastifizierungseinrichtung verbunden sind, ist ein kontinuierlicher Volumenstrom innerhalb des Extrusionszylinders erzielt, wodurch Abschereffekte, welche eine Verkürzung der langen Fasern bewirken, deutlich vermindert sind. Überraschend hat sich gezeigt, dass eine Ursache der Längeneinbußen des langen Materials bei Vorrichtungen des Standes der Technik durch den diskontinuierlichen Materialfluss innerhalb des Extrusionszylinders dingt ist.

In Weiterbildung der Erfindung sind die wenigstens zwei Kolbenspritzeinheiten über eine gemeinsame Austragsleitung mit der Einspritzdüse verbunden. Hierdurch ist eine zentrierte Einspritzung in die Angussbuchse des Spritzgießwerkzeugs ermöglicht.

In Ausgestaltung der Erfindung ist in den Verbindungen der Kolbenspritzeinheiten mit der gemeinsamen Austragsleitung jeweils ein Absperrventil angeordnet. Hierdurch ist ein kontinuierlicher Stoffstrom an mit Fasermaterial durchsetzter plastifizierter Kunststoffmasse über die wenigstens zwei Kolbenspritzeinheiten in das Spritzgießwerkzeug ermöglicht.

In weiterer Ausgestaltung der Erfindung weisen die Kolbenspritzeinheiten jeweils wenigstens einen innerhalb eines Kolbenzylinders über einen vorzugsweise hydraulischen Antrieb verschiebbaren Kolben auf. Dabei ist der Kolben bevorzugt auf seiner Außenmantelfläche mit gewindeartig angeordneten Wendeln versehen, wobei der Kolbenzylinder an seinem der Austragsleitung abgewandten Ende mit einer Ablauföffnung zur Leckageabführung versehen ist. Hierdurch ist einer Behinderung der Kolbenspritzeinheiten durch hinter die Kolben gelangende Kunststoffmasse verhindert. Besonders bevorzugt sind die Kolbenspritzeinheiten mit einer Heizeinrichtung zur kontinuierlichen Temperierung der plastifizierten Kunststoffmasse versehen.

In Weiterbildung der Erfindung ist die Umstelleinrichtung über eine Zulaufleitung mit der Plastifiziereinrichtung und über je eine Ablaufleitung mit einer Kolbenspritzeinheit verbunden, wobei in der Zulaufleitung sowie in den Ablaufleitungen jeweils ein Ventil angeordnet ist. Dabei sind die in den Ablaufleitungen angeordneten Ventile bevorzugt als Schließventil, insbesondere als Bolzenschließventil ausgebildet, das vorzugsweise hydraulisch betätigbar ist.

In Ausgestaltung der Erfindung ist in der Zulaufleitung ein Mehrwegeventil angeordnet, an dessen Eingang die Zulaufleitung und an dessen Ausgängen jeweils eine Ablaufleitung angeschlossen ist. Hierdurch ist die Zuordnung eines Strömungsweges für die Kunststoffmasse ermöglich. Alternativ kann in der Zulaufleitung auch ein Schließventil, vorzugsweise ein Bolzenschließventil angeordnet, wobei sich an dieses Ventil eine Verzweigung in die angeordneten Ablaufleitungen anschließt. Hierbei ist jedoch keine Zuordnung eines Strömungsweges für die Kunststoffmasse ermöglicht; es werden vielmehr alle Ablaufleitungen bis zu den in den Ablaufleitungen angeordneten Schließventilen mit Kunststoffmasse befüllt.

In weiterer Ausgestaltung der Erfindung ist das in der Zulaufleitung angeordnete Schließventil derart ausgebildet, dass es bei einem vergleichsweise geringen Gegendruck in der Größenordnung von etwa 15 Bar schaltet; die Schließventile in den Ablaufleitungen sind derart ausgebildet, dass sie gegen einen Einspritzdruck der jeweiligen Kolbenspritzeinheit in der Größenordnung von 1000 Bar schalten. Zwischen dem in der Zulaufleitung angeordneten Ventil einerseits und den in den Ablaufleitungen angeordneten Schließventilen andererseits ist vorteilhaft ein wenigstens Zwischenraum zum Abfangen von Druckspitzen und Leckagen gebildet.

In weiterer Ausgestaltung der Erfindung weisen die Zulauf- und Ablaufleitungen einen im Wesentlichen identischen Durchmesser auf, der vorzugsweise im Wesentlichen dem Durchmesser des Strömungskanals der Extruderschnecke entspricht. Hierdurch ist einer übermäßigen Kompression entgegengewirkt, wodurch eine gute Homogenisierung der mit dem Fasermaterial versetzten Kunststoffmasse gewährleistet ist. Die Geometrie der Umschalteinrichtung mit ihren Zulauf- und Ablaufleitungen ist vorzugsweise derart auszuführen, dass große Durchmesser und große Radien verwendet werden, um Widerstände, die zu einer Längenreduzierung der in die Kunststoffmasse eingebrachten Fasern führen können, minimiert sind. Auch die Leitungen der Umschaltvorrichtung sind vorzugsweise mit Heizelementen versehen, über welche eine Temperierung der Kunststoffmasse ermöglicht ist.

In Weiterbildung der Erfindung sind die Ventile der Umstelleinrichtung sowie die Absperrventile der Kolbenspritzeinheiten mit einer Steuerung verbunden, die derart eingerichtet ist, dass durch wechselseitige Ansteuerung der Ventile ein kontinuierlicher Kunststoffmasse-Volumenstrom durch die Zulaufleitung bewirkt ist. Dabei ist die Steuerung vorzugsweise in die Maschinensteuerung integriert.

In Weiterbildung der Erfindung weist die Schneckengeometrie der Extruderschnecke sechs Zonen auf, wobei die ersten drei Zonen entsprechend der Schneckengeometrie einer konventionellen Dreizonenschnecke eine Einzugszone, eine Kompressionszone und eine Meteringzone aufweist, woran sich eine durchmesserreduzierte Dekompressionszone mit anschließender Meteringzone anschließt, gefolgt von einer weiteren, wendelfreien Homogenisierungszone. Dabei ist die Dekompressionszone vorteilhaft im Bereich der in das Extrudergehäuse mündenden Dosiereinrichtung angeordnet. Hierdurch ist eine gute Durchmischung der Kunststoffmasse mit dem eingebrachten Fasermaterial erzielt. Die weitere, wendelfreie Homogenisierungszone ist vorzugsweise in Form eines Mischelements, beispielsweise eines Rautenmischelements ausgebildet. Alternativ sind auch Mischelemente mit umlaufend radial auskragenden, vorzugsweise paddelförmigen Mischkörpern einsetzbar. Vorteilhaft ist die Extruderschnecke am Ende der dritten Zone (Meteringzone) mit einem Scherteil versehen. Hierdurch können letzte Feststoffpartikel in der Kunststoffmasse zerfetzt, bevor das Fasermaterial zugeführt wird.

In Ausgestaltung der Erfindung ist die Dosiereinrichtung für das Fasermaterial eine gravimetrische Dosiereinrichtung, die bevorzugt mit einer Stopfschnecke für die Fasermaterialzuführung verbunden ist. Dabei weist die Stopfschnecke vorteilhaft gegensinnig rotierende Schneckenwellen mit bevorzugt gegenseitig abschälender Doppelschneckengeometrie auf. Hierdurch ist eine Desagglomerierung der Faserbündel des Fasermaterials bereits vor der Zuführung in die Kunststoffschmelze ermöglicht. Durch die Desagglomerierung ist der Gegendruck im Extrusionszylinder vermindert, wodurch die Fasern geschont werden.

In weiterer Ausgestaltung der Erfindung weist der Bereich der Fasermaterialzuführung im Übergang der Stopfschnecke zum Extrusionszylinder eine sauerstoffarme Umgebung auf. Hierdurch ist die Oxidation der Kunststoffmasse (bspw. PA) gemindert, wodurch die Verarbeitbarkeit verbessert ist.
Andere Weiterbildungen und Ausgestaltungen der Erfindung sind in den übrigen Unteransprüchen angegeben. Ein Ausführungsbeispiel ist in den Zeichnungen dargestellt und wird nachfolgend im Einzelnen beschrieben. Es zeigen:
- Figur 1: die schematische Darstellung einer Vorrichtung zum Spritzgießen von Faserverbundkunststoffformteilen;
- Figur 2: die Darstellung der Vorrichtung aus Figur 1 in der Draufsicht;

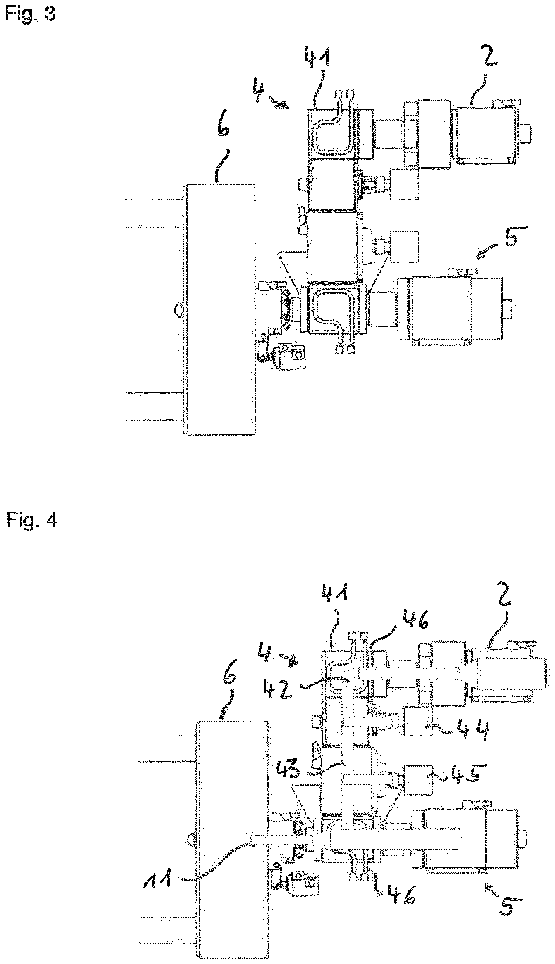

- Figur 3: die Detaildarstellung der Einspritzeinrichtung mit Umstelleinrichtung der Vorrichtung aus Figur 1;
- Figur 4: die Darstellung gemäß Figur 3 mit schematisch skizzierten Strömungsleitungen und Ventilen;
- Figur 5: die schematische Darstellung der Umstelleinrichtung der Vorrichtung aus Figur 1 (rechter Strömungskanal freigegeben) a) in der Seitenansicht: b) im Schnitt A-A;
- Figur 6: die schematische Darstellung der Umstelleinrichtung der Vorrichtung aus Figur 1 (linker Strömungskanal freigegeben) a) in der Seitenansicht: b) im Schnitt A-A;

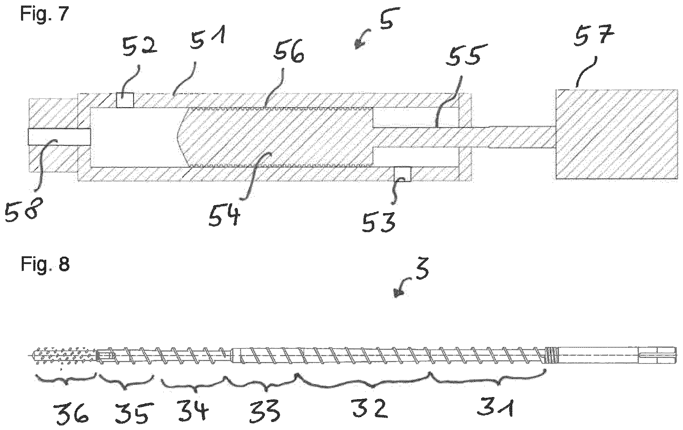

- Figur 7: die schematische Darstellung eines Kolbenzylinders der Vorrichtung aus Figur 1 im Längsschnitt und
- Figur 8: die schematische Darstellung der Extruderschnecke der Vorrichtung aus Figur 1.

Die als Ausführungsbeispiel gewählte Vorrichtung zum Spritzgießen von Faserverbundkunststoffformteilen besteht im Wesentlichen aus einem Spritzmodul 1, das über eine Einspritzdüse 11 mit einem Formwerkzeug 6 verbunden ist. Das Spritzmodul 1 ist gebildet durch einen Extrusionszylinder 2, in dem eine Schneckenwelle 3 über einen mit dieser verbundenen Antrieb 31 rotierbar angeordnet ist. Der Extrusionszylinder 2 ist außen umlaufend mit Heizbändern 21 versehen, deren Heizleistung durch in den Mantel des Extrusionszylinders 2 weiterhin angeordnete Heizwendeln noch verstärkt wird. Endseitig ist an dem Extrusionszylinder 2 ein Einfülltrichter 22 angeordnet, der in dem Extrusionsraum des Extrusionszylinders 2 mündet. Der Einfülltrichter 22 dient der Zuführung von plastifizierbarem Kunststoffgranulat. Beabstandet zu dem Einfülltrichter 22 ist weiterhin eine gravimetrische Dosiereinrichtung 23 angeordnet, die für die Fasermaterialzuführung über eine Stopfschnecke 24 mit dem Extrusionszylinder 2 verbunden ist. Die Stopfschnecke 24 ist im Ausführungsbeispiel mit zwei gegensinnig rotierenden Wellen ausgeführt, die eine gegenseitig abschälende Doppelschneckengeometrie aufweisen.

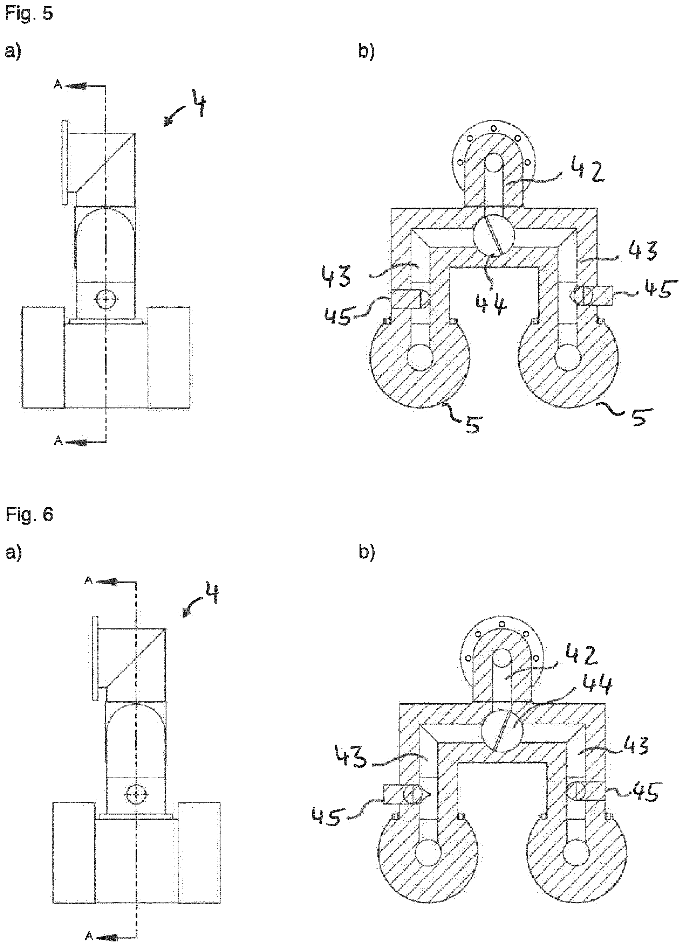

Die Extruderschnecke 3 ist in Figur 6 dargestellt. Die Schneckengeometrie der Extruderschnecke 3 weist insgesamt sechs Zonen auf, wobei die ersten drei Zonen entsprechend der Schneckengeometrie einer konventionellen Dreizonenschnecke eine Einzugszone 31, eine Kompressionszone 32 und eine Meteringzone 33 aufweist, hieran schließt sich eine durchmesserreduzierte Dekompressionszone 34 mit anschließender Meteringzone 35 an, gefolgt von einer wendelfreien Homogenisierungszone 36. Im Ausführungsbeispiel ist die Homogenisierungszone 36 in Form eines Rautenmischelements ausgebildet. Die Dekompressionszone 34 der Extruderschnecke 3 ist im Bereich der in den Extrusionszylinder 2 mündenden Stopfschnecke 24 der gravimetrischen Dosiereinrichtung 23 angeordnet.

Der Extrusionszylinder 2 ist an seinem dem Einfülltrichter 22 gegenüberliegendem Ende mit der Zulaufleitung 42 einer Umstelleinrichtung 4 verbunden. Die Zulaufleitung 42 ist innerhalb eines Gehäuses 41 angeordnet und mündet in eine Ablaufverzweigung, die im Ausführungsbeispiel durch zwei Y-förmig winklig zueinander angeordnete Ablaufleitungen 43 gebildet ist. Im Übergang der Zulaufleitung 2 zu den Ablaufleitungen 43 ist ein Dreiwegeventil 44 angeordnet. Über das Dreiwegeventil 44 ist die Durchleitung in jeweils eine der Ablaufleitungen 43 sowie auch die Sperrung beider Ablaufleitungen 43 ermöglicht. Die Ablaufleitungen 43 münden jeweils in die Zulauföffnung 52 des Zylinders 51 einer Kolbenspritzeinheit 5. Dabei ist in den Ablaufleitungen 43 den jeweiligen Zulauföffnungen 52 der Kolbenspritzeinheiten 5 vorgeschaltet ein Bolzenschließventil 45 angeordnet. Die Bolzenschließventile 45 sind auf einen anliegenden Einspritzdruck von ca. 1000 bar ausgelegt. Das Gehäuse 41 der Umstelleinrichtung 4 ist ebenfalls mit Heizbändern 46 versehen.

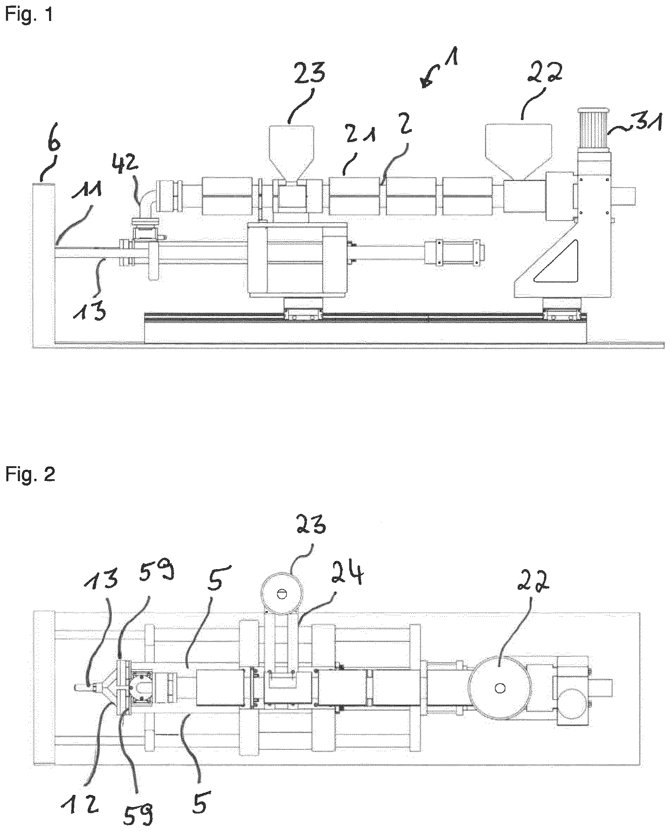

Die beiden Kolbenspritzeinheiten 5 sind, wie den Figuren 1 und 2 zu entnehmen ist, parallel zueinander beidseitig des Extrusionszylinders 2 vertikal unter diesem positioniert. Sie umfassen jeweils einen Zylinder 51, in dem ein Kolben 54 über einen hydraulischen Antrieb verschiebbar angeordnet ist. Der hydraulische Antrieb 57 ist über eine Kolbenstange 55 mit dem Kolben 54 verbunden. Der Kolben 54 ist auf seiner Außenmantelfläche mit gewindeartig angeordneten Wendeln 55 versehen. An seiner der Zulauföffnung 52 entgegengesetzten Seite des Kolbens 54 ist in dem Zylinder 51 auf dessen der Zulauföffnung 52 gegenüberliegenden Unterseite eine Ablauföffnung 53 zur Leckageabführung eingebracht.

Die Kolbenspritzeinheiten 5 weisen an ihrer der Kolbenstange 55 abgewandten Vorderseite eine Austragsöffnung 58 auf, die über ein Absperrventil 59 mit einem Ast eines Y-Stücks 12 verbunden ist, welches in einer Austragsleitung 13 mündet, die mit der Einspritzdüse 11 verbunden ist. Zur Gewährleistung eines kontinuierlichen Kunststoffmassevolumenstroms sind die Ventile 44, 45 der Umstelleinrichtung 4 sowie die Absperrventile 59 der Kolbenspritzeinheit 5 mit einer - nicht dargestellten - Steuerung verbunden, die im Ausführungsbeispiel in die - nicht dargestellte - Maschinensteuerung integriert ist.

Zum Spritzgießen von Faserverbundkunststoffformteilen wird Kunststoffgranulat über den Einfülltrichter 22 auf die Wendel der Extruderschnecke 3 aufgegeben, wobei das Kunststoffgranulat in dem Extrusionszylinder fortwährend plastifiziert und über die Extruderschnecke 3 in Richtung Umstelleinrichtung 4 gefördert wird. Im Bereich der Dekompressionszone 34 der Extruderschnecke 3 sinkt der Druck in der plastifizierten Kunststoffmasse, so dass das durch die gravimetrische Dosiereinrichtung 23 über die Stopfschnecke 24 an dieser Stelle in den Extrusionszylinder 2 zugegebene Fasermaterial nachfolgend gut mit der Kunststoffmasse durchmischt wird, bis in der Homogenisierungszone 36 der Extruderschnecke 3 die gewünschte Homogenisierung der mit dem Fasermaterial angereicherten Kunststoffmasse erfolgt ist. Dabei wird das Fasermaterial in einer möglichst sauerstoffarmen Umgebung zugeführt, um die Oxidation der Kunststoffmasse zu minimieren.

Die so homogenisierte plastifizierte Faserverbundkunststoffmasse wird sodann mit einem Druck von etwa 15 bar in die Zulaufleitung 42 der Umstelleinrichtung 4 gepresst, wo sie gesteuert durch das Dreiwegeventil 44 in eine der beiden Ablaufleitungen 43 geführt durch die Ablauföffnung 53 einer Kolbenspritzeinheit 5 in dessen Zylinder 51 gelangt. Im Zuge der Befüllung des Zylinders 51 dieser Kolbenspritzeinheit 5 mit der plastifizierten Faserverbundkunststoffmasse wird der Kolben 54 nach hinten bewegt. Bei Erreichen der für den nachfolgenden Spritzzyklus erforderlichen Füllmenge wird das der Zulauföffnung 52 vorgeschaltete Bolzenschließventil 45 über die - nicht dargestellte - Steuereinrichtung geschlossen, wonach über den Antrieb 57 der Kolben 54 nach vorne bewegt wird, bis der erforderliche Einspritzdruck von ca. 1000 bar erreicht ist. Nachfolgend wird das Absperrventil 59 geöffnet, wodurch die in dem Zylinder 51 befindliche Faserverbundkunststoffmasse über die Austragsleitung 13 durch die Einspritzdüse 11 in das Formwerkzeug 6 verbracht wird.

Nachdem die Ablaufleitung 43 nach Erreichen des erforderlichen Füllgrades des Zylinders 51 der Kolbenspritzeinheit 5 durch das Bolzenschließventil 45 verschlossen ist, wird über das Dreiwegeventil 44 der durch die Zulaufleitung 42 geförderte Faserverbundkunststoffmassenstrom in die zweite Ablaufleitungen 43 geleitet, wonach der Zylinder 51 der zweiten Kolbenspritzeinheit 5 befüllt wird, bis die erforderliche Füllmenge für den nachfolgenden Spritzzyklus erreicht ist. Nachfolgend wird hier wiederum das zugeordnete Bolzenschließventil 45 geschlossen und der Kolben 54 über den Antrieb 57 nach vorne bewegt, bis der erforderliche Einspritzdruck erzielt ist, wonach wiederum durch Öffnen des Absperrventils 59 der nächste Spritzvorgang initiiert wird.

Bei der Vorwärtsbewegung des Kolbens 54 durch den Antrieb 57 zur Erzielung des Einspritzdrucks gelangt eine geringe Leckagemenge zwischen den Kolben 54 und dem Zylinder 51, geführt durch die Wendeln 55 in den rückwärtigen Bereich des Kolbenzylinders 51 des Kolbens 54, wonach diese Leckagemasse im Zuge der Zurückbewegung des Kolbens 54 bei erneuter Befüllung des Zylinders 51 mit Faserverbundkunststoffmasse durch die Ablauföffnung 53 aus dem Zylinder 51 herausgeführt wird.

Durch die zuvor beschriebene über das Dreiwegeventil 44 gesteuerte wechselseitige Befüllung der beiden Kolbenspritzeinheiten 5 unter wechselseitigem Öffnen und Verschließen der Ablaufleitungen 43 über die Bolzenschließventile 45 ist eine kontinuierliche Förderung von Faserverbundkunststoffmasse aus dem Extrusionszylinder 2 durch die Zulaufleitung 42 der Umstelleinrichtung 4 bewirkt. Hierdurch ist eine maximale Länge der Fasern des über die gravimetrische Dosiereinrichtung 23 zugegebenen Fasermaterials erzielt. Der Einspritzvorgang erfolgt über ein und dieselbe Einspritzdüse 11 über die gemeinsame Austragsleitung 3 wechselseitig durch die beiden Kolbenspritzeinheiten 5.

## Patentansprüche

1. Vorrichtung zum Spritzgießen von Faserverbundkunststoffformteilen mit einer einen Extrusionszylinder (2) und eine in diesem um eine Längsachse drehbar angeordnete Extruderschnecke (3) aufweisenden Plastifizierungseinrichtung, einer in dem Extrusionszylinder (2) mündenden Dosiereinrichtung für Fasermaterial sowie einer eine Einspritzdüse (11) aufweisenden Einspritzeinrichtung, **dadurch gekennzeichnet, dass** die Einspritzeinrichtung wenigstens zwei Kolbenspritzeinheiten (5) umfasst, deren Kolbenzylinder (51) zur wechselnden Beschickung mit plastifizierter Kunststoffmasse über eine Umstelleinrichtung (4) mit der Plastifizierungseinrichtung verbunden sind.

2. Vorrichtung nach Anspruch 1, **dadurch gekennzeichnet, dass** die wenigstens zwei Kolbenspritzeinheiten (5) über eine gemeinsame Austragsleitung (13) mit der Einspritzdüse (11) verbunden sind.

3. Vorrichtung nach Anspruch 2, **dadurch gekennzeichnet, dass** in den Verbindungen der Kolbenspritzeinheiten (5) mit der gemeinsamen Austragsleitung (13) jeweils ein Absperrventil (59) angeordnet ist.

4. Vorrichtung nach einem der vorgenannten Ansprüche, **dadurch gekennzeichnet, dass** die Kolbenspritzeinheiten (5) jeweils wenigstens einen innerhalb eines Kolbenzylinders (51) über einen vorzugsweise hydraulischen Antrieb (57) verschiebbaren Kolben (54) aufweisen.

5. Vorrichtung nach Anspruch 4, **dadurch gekennzeichnet, dass** der Kolben (54) auf seiner Außenmantelfläche mit gewindeartig angeordneten Wendeln (55) versehen ist, wobei der Kolbenzylinder (51) an seinem der Austragsleitung (13) abgewandten Ende mit einer Ablauföffnung (53) zur Leckageabführung versehen ist.

6. Vorrichtung nach einem der vorgenannten Ansprüche, **dadurch gekennzeichnet, dass** die Umstelleinrichtung (4) über eine Zulaufleitung (42) mit der Plastifiziereinrichtung und über je eine Ablaufleitung (43) mit einer Kolbenspritzeinheit (5) verbunden ist, wobei in der Zulaufleitung (42) sowie in den Ablaufleitungen (43) jeweils ein Ventil angeordnet ist.

7. Vorrichtung nach Anspruch 6, **dadurch gekennzeichnet, dass** in den Ablaufleitungen (43) jeweils ein Schließventil, vorzugsweise ein Bolzenschließventil (45), angeordnet ist, über das die jeweilige Ablaufleitung (43) verschließbar ist.

8. Vorrichtung nach Anspruch 6 oder 7, **dadurch gekennzeichnet, dass** in der Zulaufleitung (42) ein Mehrwegeventil angeordnet ist, an dessen Eingang die Zulaufleitung (42) und an dessen Ausgängen jeweils eine Ablaufleitung (43) angeschlossen ist.

9. Vorrichtung nach Anspruch 6 oder 7, **dadurch gekennzeichnet, dass** in der Zulaufleitung (42) ein Schließventil angeordnet ist, an das sich eine Verzweigung in die Ablaufleitung (43) anschließt.

10. Vorrichtung nach einem der Ansprüche 6 bis 9, **dadurch gekennzeichnet, dass** die Zulauf- und Ablaufleitungen (42, 43) einen im Wesentlichen identischen Durchmesser aufweisen.

11. Vorrichtung nach einem der Ansprüche 6 bis 10, **dadurch gekennzeichnet, dass** die Ventile (44, 45) der Umstelleinrichtung (4) sowie die Absperrventile (59) der Kolbenspritzeinheiten (5) mit einer Steuerung verbunden sind, die derart eingerichtet ist, dass durch wechselseitige Ansteuerung der Ventile ein kontinuierlicher Kunststoffmasse-Volumenstrom durch die Zulaufleitung (42) bewirkt ist.

12. Vorrichtung nach einem der vorgenannten Ansprüche, **dadurch gekennzeichnet, dass** die Schneckengeometrie der Extruderschnecke (3) sechs Zonen aufweist, wobei die ersten drei Zonen entsprechend der Schneckengeometrie einer konventionellen Dreizonenschnecke eine Einzugszone (31), eine Kompressionszone (32) und eine bevorzugt mit einem Scherteil versehene Metringzone (33) aufweist, woran sich eine durchmesserreduzierte Dekompressionszone (34) mit anschließender Metringzone (35) anschließt, gefolgt von einer wendelfreien Homogenisierungszone (36).

13. Vorrichtung nach Anspruch 11, **dadurch gekennzeichnet, dass** die Dekompressionszone (34) im Bereich der in den Extrusionszylinder (2) mündenden Dosiereinrichtung angeordnet ist.

14. Vorrichtung nach Anspruch 11 oder 12, **dadurch gekennzeichnet, dass** die Extruderschnecke (3) im Bereich der Homogenisierungszone (36) umlaufend mit radial auskragenden, vorzugsweise paddelförmigen Mischkörpern versehen ist.

15. Vorrichtung nach einem der vorgenannten Ansprüche, **dadurch gekennzeichnet, dass** die Dosiereinrichtung für das Fasermaterial eine gravimetrische Dosiereinrichtung (23) ist, die bevorzugt mit einer vorzugsweise gegensinnig rotierende Schneckenwellen mit bevorzugt gegenseitig abschälender Doppelschneckengeometrie aufweisenden Stopfschnecke (24) für die Fasermaterialzuführung verbunden ist.

## Geänderte Patentansprüche

### Geänderte Patentansprüche gemäss Regel 137(2) EPÜ.

1. Vorrichtung zum Spritzgießen von Faserverbundkunststoffformteilen mit einer einen Extrusionszylinder (2) und eine in diesem um eine Längsachse drehbar angeordnete Extruderschnecke (3) aufweisenden Plastifizierungseinrichtung, einer in dem Extrusionszylinder (2) mündenden Dosiereinrichtung für Fasermaterial sowie einer eine Einspritzdüse (11) aufweisenden Einspritzeinrichtung, **dadurch gekennzeichnet, dass** die Einspritzeinrichtung wenigstens zwei Kolbenspritzeinheiten (5) umfasst, deren Kolbenzylinder (51) zur wechselnden Beschickung mit plastifizierter Kunststoffmasse über eine Umstelleinrichtung (4) mit der Plastifizierungseinrichtung verbunden sind, wobei die Schneckengeometrie der Extruderschnecke (3) sechs Zonen aufweist, wobei die ersten drei Zonen entsprechend der Schneckengeometrie einer konventionellen Dreizonenschnecke eine Einzugszone (31), eine Kompressionszone (32) und eine bevorzugt mit einem Scherteil versehene Metringzone (33) aufweist, woran sich eine durchmesserreduzierte Dekompressionszone (34) mit anschließender Metringzone (35) anschließt, gefolgt von einer wendelfreien Homogenisierungszone (36).

2. Vorrichtung nach Anspruch 1, **dadurch gekennzeichnet, dass** die wenigstens zwei Kolbenspritzeinheiten (5) über eine gemeinsame Austragsleitung (13) mit der Einspritzdüse (11) verbunden sind.

3. Vorrichtung nach Anspruch 2, **dadurch gekennzeichnet, dass** in den Verbindungen der Kolbenspritzeinheiten (5) mit der gemeinsamen Austragsleitung (13) jeweils ein Absperrventil (59) angeordnet ist.

4. Vorrichtung nach einem der vorgenannten Ansprüche, **dadurch gekennzeichnet, dass** die Kolbenspritzeinheiten (5) jeweils wenigstens einen innerhalb eines Kolbenzylinders (51) über einen vorzugsweise hydraulischen Antrieb (57) verschiebbaren Kolben (54) aufweisen.

5. Vorrichtung nach Anspruch 4, **dadurch gekennzeichnet, dass** der Kolben (54) auf seiner Außenmantelfläche mit gewindeartig angeordneten Wendeln (55) versehen ist, wobei der Kolbenzylinder (51) an seinem der Austragsleitung (13) abgewandten Ende mit einer Ablauföffnung (53) zur Leckageabführung versehen ist.

6. Vorrichtung nach einem der vorgenannten Ansprüche, **dadurch gekennzeichnet, dass** die Umstelleinrichtung (4) über eine Zulaufleitung (42) mit der Plastifiziereinrichtung und über je eine Ablaufleitung (43) mit einer Kolbenspritzeinheit (5) verbunden ist, wobei in der Zulaufleitung (42) sowie in den Ablaufleitungen (43) jeweils ein Ventil angeordnet ist.

7. Vorrichtung nach Anspruch 6, **dadurch gekennzeichnet, dass** in den Ablaufleitungen (43) jeweils ein Schließventil, vorzugsweise ein Bolzenschließventil (45), angeordnet ist, über das die jeweilige Ablaufleitung (43) verschließbar ist.

8. Vorrichtung nach Anspruch 6 oder 7, **dadurch gekennzeichnet, dass** in der Zulaufleitung (42) ein Mehrwegeventil angeordnet ist, an dessen Eingang die Zulaufleitung (42) und an dessen Ausgängen jeweils eine Ablaufleitung (43) angeschlossen ist.

9. Vorrichtung nach Anspruch 6 oder 7, **dadurch gekennzeichnet, dass** in der Zulaufleitung (42) ein Schließventil angeordnet ist, an das sich eine Verzweigung in die Ablaufleitung (43) anschließt.

10. Vorrichtung nach einem der Ansprüche 6 bis 9, **dadurch gekennzeichnet, dass** die Zulauf- und Ablaufleitungen (42, 43) einen im Wesentlichen identischen Durchmesser aufweisen.

11. Vorrichtung nach einem der Ansprüche 6 bis 10, **dadurch gekennzeichnet, dass** die Ventile (44, 45) der Umstelleinrichtung (4) sowie die Absperrventile (59) der Kolbenspritzeinheiten (5) mit einer Steuerung verbunden sind, die derart eingerichtet ist, dass durch wechselseitige Ansteuerung der Ventile ein kontinuierlicher Kunststoffmasse-Volumenstrom durch die Zulaufleitung (42) bewirkt ist.

12. Vorrichtung nach einem der vorgenannten Ansprüche, **dadurch gekennzeichnet, dass** die Dekompressionszone (34) im Bereich der in den Extrusionszylinder (2) mündenden Dosiereinrichtung angeordnet ist.

13. Vorrichtung nach einem der vorgenannten Ansprüche, **dadurch gekennzeichnet, dass** die Extruderschnecke (3) im Bereich der Homogenisierungszone (36) umlaufend mit radial auskragenden, vorzugsweise paddelförmigen Mischkörpern versehen ist.

14. Vorrichtung nach einem der vorgenannten Ansprüche, **dadurch gekennzeichnet, dass** die Dosiereinrichtung für das Fasermaterial eine gravimetrische Dosiereinrichtung (23) ist, die bevorzugt mit einer vorzugsweise gegensinnig rotierende Schneckenwellen mit bevorzugt gegenseitig abschälender Doppelschneckengeometrie aufweisenden Stopfschnecke (24) für die Fasermaterialzuführung verbunden ist.
